# EUROPEAN PATENT APPLICATION

(11) **EP 2 505 342 A1**
(43) Date of publication of application: **03.10.2012**
(21) Application number: 10833283.4
(22) Date of filing: 25.11.2010
(51) Int. Cl.: B29C 70/06, C08J 5/24, B29K 105/08

(54) **MOLDED CARBON-FIBER-REINFORCED PLASTIC AND PROCESS FOR PRODUCING SAME**

(30) Priority: 26.11.2009 JP 2009268845
(71) Applicant: JX Nippon Oil & Energy Corporation, Chiyoda-ku Tokyo 100-8162 (JP)
(72) Inventor: TAKEMURA Shinichi, Chiyoda-ku, Tokyo 1008162 (JP); IHARA Hiroyasu, Chiyoda-ku, Tokyo 1008162 (JP); FUKUDA Yoshihiro, Chiyoda-ku, Tokyo 1008162 (JP); ISHII Mitsuhiro, Chiyoda-ku, Tokyo 1008162 (JP)
(74) Representative: Grünecker, Kinkeldey, Stockmair & Schwanhäusser
(86) International application number: PCT/JP2010/071044
(87) International publication number: WO 2011/065437

(57) **Abstract**

A molded carbon-fiber-reinforced plastic (molded CFRP) 1 comprises a plurality of carbon fiber layers 2 comprising carbon fibers, a resin body 3 in which the carbon fiber layers 2 are buried, and pins 5 which are inserted and fixed in a plurality of holes 4 formed in the resin body 3 so as to extend through the carbon fiber layers 2. In the molded CFRP 1, the pins 5 can be inserted and fixed in the plurality of holes 4 formed in the resin body 3 so as to extend through the carbon fiber layers 2, to thereby improve interlaminar toughness of the molded CFRP 1.

## Description

### Technical Field

The present invention relates to a molded carbon-fiber-reinforced plastic and a process for producing same.

### Background Art

As a molded carbon-fiber-reinforced plastic, one in which a plurality of carbon fiber layers are laminated and buried in a resin body is known (for example, see Patent Literature 1). Since such a molded carbon-fiber-reinforced plastic is lighter in weight and has a higher strength in comparison with aluminum or iron, recently, it has been used for airframes of aircrafts and has been attracting attention as a new material.

### Citation List

### Patent Literature

Patent Literature 1: Japanese Patent Application Laid-Open Publication No. 2000-143360

### Summary of Invention

### Technical Problem

By the way, in the molded carbon-fiber-reinforced plastic mentioned above, for example, when an impact is applied or a shear force is exerted vertically to a lamination direction, a so-called interlaminar delamination phenomenon occurs; thus, there is pointed out a problem of having relatively low interlaminar toughness.

Thus, an object of the present invention is to provide a molded carbon-fiber-reinforced plastic enabling improvement in interlaminar toughness and a process for producing same.

### Solution to Problem

Aiming to solve the problem mentioned above, a molded carbon-fiber-reinforced plastic of the present invention comprises a plurality of carbon fiber layers comprising carbon fibers, a resin body in which the carbon fiber layers are buried, and pins which are inserted and fixed in a plurality of holes formed in the resin body so as to extend through the carbon fiber layers.

In the molded carbon-fiber-reinforced plastic, the pins can be inserted and fixed in the plurality of holes formed in the resin body so as to extend through the carbon fiber layers, to thereby improve interlaminar toughness.

In the molded carbon-fiber-reinforced plastic according to the present invention, it is preferred that the pins have electrically conductive properties. By this configuration, it is possible to improve electrically conductive properties and a thermal conductivity between the carbon fiber layers.

In this case, it is preferred that the pins are formed of a carbon-fiber-reinforced plastic in which carbon fibers are oriented in an axial direction. By this configuration, it is possible to achieve weight saving and strength improvement of the pins, and improve the electrically conductive properties between the carbon fiber layers.

Moreover, a process for producing a molded carbon-fiber-reinforced plastic of the present invention comprises a step of laminating a plurality of prepregs containing carbon fibers to obtain a prepreg laminate, a step of forming a plurality of holes in the prepreg laminate so as to extend through the prepregs, a step of inserting pins in the holes, and a step of curing the prepreg laminate by heat with the pins inserted in the holes to obtain a molded carbon-fiber-reinforced plastic.

By the process for producing a molded carbon-fiber-reinforced plastic, the pins can be inserted and fixed in the plurality of holes formed in the resin body so as to extend through the carbon fiber layers, to thereby improve the interlaminar toughness of the produced molded carbon-fiber-reinforced plastic.

In the process for producing a molded carbon-fiber-reinforced plastic of the present invention, it is preferred that the pins are tapered at at least one of their ends when the pins are inserted in the holes. In this case, it is possible to insert the pins reliably and easily in the holes formed in the prepreg laminate.

In the process for producing a molded carbon-fiber-reinforced plastic of the present invention, it is preferred that the pins are formed of a carbon-fiber-reinforced plastic in which carbon fibers are oriented in an axial direction so as to have lengths such that the pins project from the holes when the pins are inserted in the holes, and that a softening temperature or a melting temperature of a resin of the carbon-fiber-reinforced plastic is equal to or lower than a softening temperature or a melting temperature of a resin of the prepregs. Moreover, it is preferred that a glass transition temperature of the resin of the carbon-fiber-reinforced plastic is equal to or lower than a glass transition temperature of the resin of the prepregs. In this case, when the prepreg laminate is cured by heat, the softened pins fill spaces in the holes, thereby it is possible to fix the pins in the holes reliably and planarize the projecting portions of the pins. In this case, examples of the resin include thermosetting resins, thermoplastic resins, epoxy, vinyl esters, unsaturated polyesters, phenol resins, and PEEK.

### Advantageous Effects of Invention

According to the present invention, it is possible to provide a molded carbon-fiber-reinforced plastic enabling improvement in interlaminar toughness and a process for producing same.

### Brief Description of Drawings

[Figure 1] Figure 1 is a perspective view illustrating one embodiment of a molded carbon-fiber-reinforced plastic according to the present invention
[Figure 2] Figure 2 is a perspective view illustrating a step of a process of producing the molded carbon-fiber-reinforced plastic illustrated in Figure 1
[Figure 3] Figure 3 is a perspective view illustrating a step subsequent to Figure 2
[Figure 4] Figure 4 is a perspective view illustrating a step subsequent to Figure 3
[Figure 5] Figure 5 is a partially enlarged cross sectional view of the step illustrated in Figure 4
[Figure 6] Figure 6 is a partially enlarged cross sectional view illustrating a step subsequent to Figure 5
[Figure 7] Figure 7 is a perspective view illustrating another embodiment of a molded carbon-fiber-reinforced plastic according to the present invention
[Figure 8] Figure 8 is an exploded perspective view illustrating a prepreg laminate of a molded carbon-fiber-reinforced plastic of Example.

### Description of Embodiments

Hereinafter, a detail description will be given of a preferred embodiment of the present invention with reference to the drawings. It is noted that, in the Figures, the same or corresponding parts are donated by the same reference numerals and the overlapping description will be omitted.

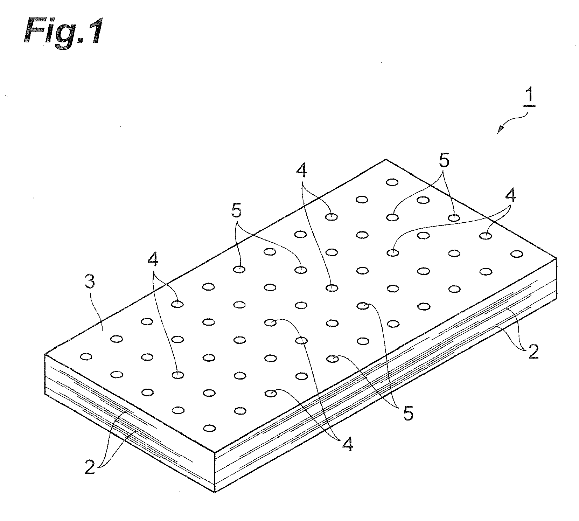

As shown in Figure 1, a molded carbon-fiber-reinforced plastic (hereinafter, referred to as "molded CFRP") 1 comprises a plurality (for example, 32 layers) of carbon fiber layers 2 consisting of carbon fibers, and a rectangular plate-shaped resin body 3 consisting of a matrix resin impregnated into the carbon fibers. Here, the carbon fiber layers 2 are buried in the resin body 3. Since the molded CFRP 1 is lighter in weight and has a higher strength in comparison with aluminum or iron, for example, it is used for airframes of aircrafts.

In the resin body 3, a plurality of holes 4 are formed so as to penetrate along a thickness direction (that is, a lamination direction of the carbon fiber layers 2), and in each of the holes 4, a pin 5 which is formed of a carbon-fiber-reinforced plastic (CFRP: carbon fiber reinforced plastics) in which carbon fibers are oriented in an axial direction so as to have a cylindrical shape is inserted and fixed. The plurality of holes 4 are arranged in a grid pattern and formed in the resin body 3 so as to extend through all of the carbon fiber layers 2.

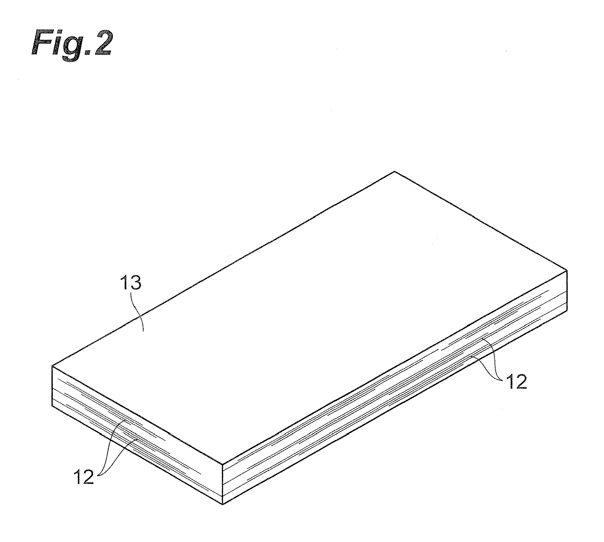

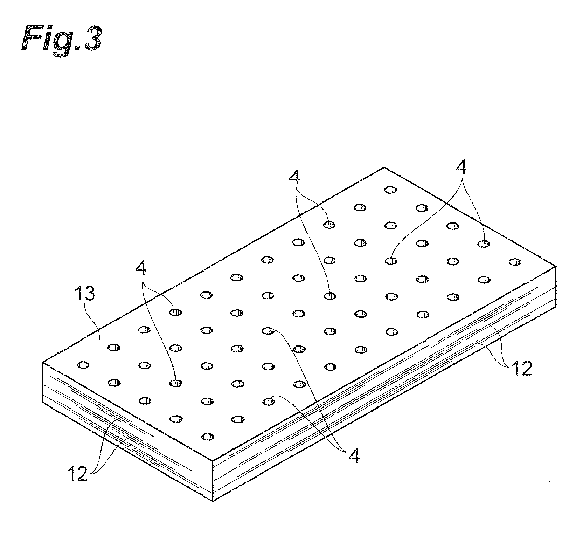

Next, a description will be given of a process for producing the molded CFRP 1 mentioned above. First, as shown in Figure 2, a plurality (for example, 32 sheets) of prepregs 12 containing carbon fibers oriented in a prescribed direction are heated and bonded to each other to be laminated in a prescribed order, and thus, a rectangular plate-shaped prepreg laminate 13 is obtained. Next, as shown in Figure 3, a plurality of holes 4 are formed in the prepreg laminate 13 so as to penetrate along a thickness direction of the prepreg laminate 13 (that is, a lamination direction of the prepregs 12). The plurality of holes 4 are arranged in a grid pattern and formed in the prepreg laminate 13 so as to extend through all of the prepregs 12.

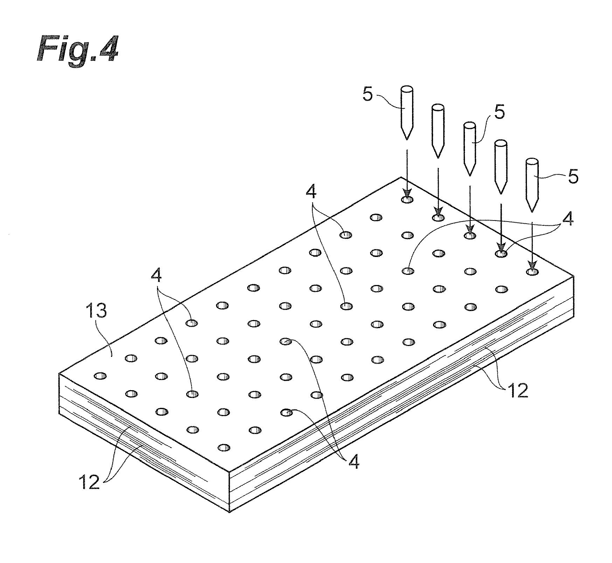

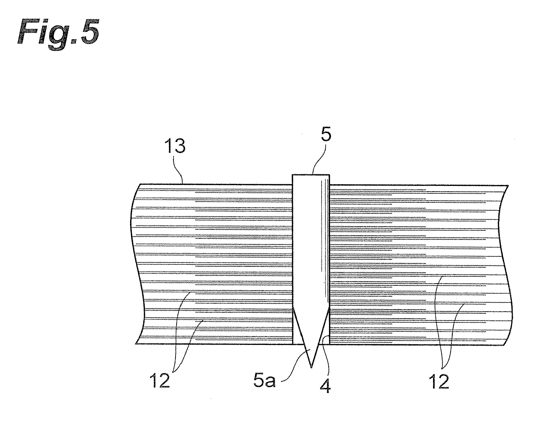

Next, as shown in Figures 4 and 5, a pin 5 is inserted in each of the holes 4 formed in the prepreg laminate 13. The pin 5 is a cylindrical-shaped member consisting of CFRP in which carbon fibers are oriented in an axial direction, and the pin 5 is tapered at one end 5a when it is inserted in the hole 4. By this, it is possible to insert the pin 5 in the hole 4 reliably and easily.

It is noted that the pin 5 is formed to have a length such that the pin 5 projects from the hole 4 when it is inserted in the hole 4. In other words, the length of the pin 5 is greater than the thickness of the prepreg laminate 13. Moreover, a glass transition temperature of a matrix resin of CFRP constituting the pin 5 is equal to or lower than a glass transition temperature of a matrix resin of the prepregs 12. As one example, an epoxy resin cured at 120°C having a glass transition temperature of 110°C is used as the matrix resin of CFRP constituting the pin 5, and an epoxy resin cured at 180°C having a glass transition temperature of 200°C is used as the matrix resin of the prepregs 12.

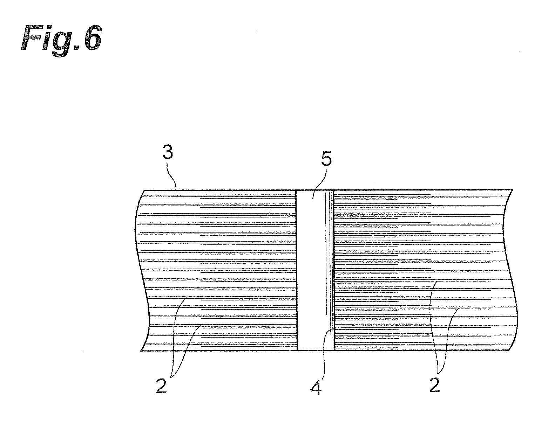

Next, the prepreg laminate 13 is cured by heat by an autoclave method or the like with the pin 5 inserted in each of the holes 4, and thus, the molded CFRP 1 is obtained. In this case, the matrix resin of CFRP constituting the pin 5 softens during the curing by heat, and the softened pin 5 fills space in the hole 4 as shown in Figure 6, thereby it is possible to fix the pin 5 in the hole 4 reliably and planarize the projecting portion of the pin 5 to obtain a flat and smooth surface.

As described above, in the molded CFRP 1, the pins 5 are inserted and fixed in the plurality of holes 4 formed in the resin body 3 so as to extend through the carbon fiber layers 2, thereby it is possible to improve interlaminar toughness of the molded CFRP 1.

Moreover, since the pin 5 is formed of CFRP in which carbon fibers are oriented in an axial direction, it is possible to achieve weight saving and strength improvement of the pin 5. Furthermore, since the pin 5 has high electrically conductive properties in the axial direction because of the carbon fibers, it is possible to improve electrically conductive properties and a thermal conductivity between the carbon fiber layers 2. This leads to improvement in an electrical conductivity of the molded CFRP 1 in a thickness direction, and for example, when the molded CFRP 1 is used for airframes of aircrafts, this is effective as measures against a lightning strike or the like.

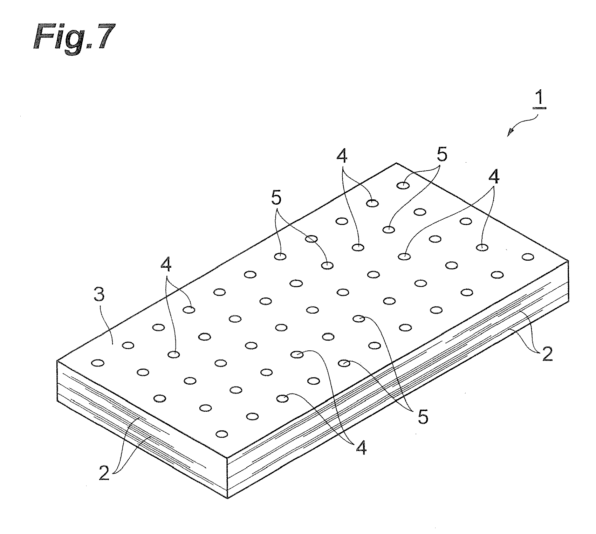

The present invention is not limited to the aforementioned embodiments. For example, the arrangement of the plurality of holes in the molded CFRP is not limited to the grid pattern, and may be a zigzag pattern as shown in Figure 7. Moreover, the material of the pin is not limited to CFRP, and may be another fiber-reinforced plastic such as GFRP (glass fiber reinforced plastics) and AFRP (aramid fiber reinforced plastics); a metal such as aluminum; or the like.

Furthermore, the molded CFRP is not limited to the producing process using the prepreg, and may be produced by a producing process using a preform as follows. That is, in a forming step of cutting and laminating the preform to give a shape, the pin is inserted in the preform along the lamination direction, and after that, a resin is injected and cured by heat by an RTM (Resin Transfer Molding) method, and thus, the molded CFRP is obtained.

### Examples

### (1) Test piece

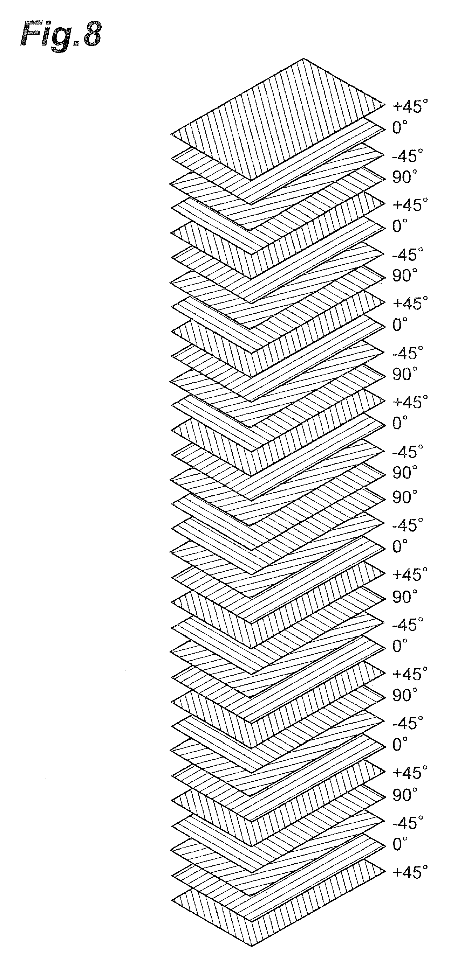

An one direction prepreg (AFW 151 g/m², RC 29.2 mass%) in which carbon fibers were TORAYCA T800S manufactured by Toray Industries, Inc. (tensile strength 5880 MPa, tensile elastic modulus 294 GPa, technical data value of Toray Industries, Inc.) and a matrix resin was an epoxy resin was prepared, and as shown in Figure 8, 32 sheets of the prepregs were heated and bonded to each other to be laminated in a pseudo isotropic laminate configuration of [45°/0°/-45°/90°]_{4S}, thus obtaining a prepreg laminate. It is noted that the angle shown in Figure 8 is an angle to a longitudinal direction of the rectangular-shaped prepreg.

Meanwhile, a tow prepreg in which carbon fibers were TORAYCA T700S manufactured by Toray Industries, Inc. and a matrix resin was an epoxy resin was prepared, and was cured by heat with tension being applied to obtain a rod-shaped member having a diameter of 1 mm. And, the rod-shaped member was cut into 4.5 mm length, thus obtaining pins.

Next, in the prepreg laminate, a plurality of holes were formed at 20 mm pitch so as to penetrate along the thickness direction, and the pins were inserted in the holes. After that, it was cured by heat by an autoclave method at 180°C for 2 hours, thus obtaining a molded CFRP having a thickness of 4.5 mm. From the molded CFRP, a compression after impact test piece having a width of 101.6 mm and a length of 152.4 mm was cut out, and taken as Example. It is noted that a compression after impact test piece produced on the same conditions except that the holes were formed but the pins were not inserted was taken as Comparative Example.

### (2) CAI test (in accordance with ASTM: D7136, D7137)

By dropping a weight which is a ϕ16 falling weight and has a mass of 5.5 kg, an impact energy of 6.7 J/mm was given to the test piece to generate internal damage, and after that, a compression test was performed at a rate of 1.0 mm/min and a compression strength after impact (CAI strength) was measured.

### (3) Result of CAI Test

Whereas the CAI strength in Comparative Example was 165 MPa, the CAI strength in Example was 180 MPa. The result revealed that interlaminar toughness of the molded CFRP in Example could be improved.

### Reference Signs List

1...molded carbon-fiber-reinforced plastic, 2...carbon fiber layer, 3...resin body, 4...hole, 5...pin, 12...prepreg, 13...prepreg laminate

## Claims

1. A molded carbon-fiber-reinforced plastic comprising:
a plurality of carbon fiber layers comprising carbon fibers;
a resin body in which the carbon fiber layers are buried; and
pins which are inserted and fixed in a plurality of holes formed in the resin body so as to extend through the carbon fiber layers.

2. The molded carbon-fiber-reinforced plastic according to claim 1, wherein the pins have electrically conductive properties.

3. The molded carbon-fiber-reinforced plastic according to claim 2, wherein the pins are formed of a carbon-fiber-reinforced plastic in which carbon fibers are oriented in an axial direction.

4. A process for producing a molded carbon-fiber-reinforced plastic, comprising:
a step of laminating a plurality of prepregs containing carbon fibers to obtain a prepreg laminate;
a step of forming a plurality of holes in the prepreg laminate so as to extend through the prepregs;
a step of inserting pins in the holes; and
a step of curing the prepreg laminate by heat with the pins inserted in the holes to obtain a molded carbon-fiber-reinforced plastic.

5. The process for producing a molded carbon-fiber-reinforced plastic according to claim 4, wherein the pins are tapered at at least one of their ends when the pins are inserted in the holes.

6. The process for producing a molded carbon-fiber-reinforced plastic according to claim 4 or 5, wherein:
the pins are formed of a carbon-fiber-reinforced plastic in which carbon fibers are oriented in an axial direction so as to have lengths such that the pins project from the holes when the pins are inserted in the holes; and
a softening temperature or a melting temperature of a resin of the carbon-fiber-reinforced plastic is equal to or lower than a softening temperature or a melting temperature of a resin of the prepregs.

7. The process for producing a molded carbon-fiber-reinforced plastic according to claim 6, wherein a glass transition temperature of the resin of the carbon-fiber-reinforced plastic is equal to or lower than a glass transition temperature of the resin of the prepregs.
